# EUROPÄISCHE PATENTSCHRIFT

(11) **EP 2 368 037 B1**
(45) Veröffentlichungstag und Bekanntmachung des Hinweises auf die Patenterteilung: **16.04.2014**
(21) Anmeldenummer: 09796606.3
(22) Anmeldetag: 20.11.2009
(51) Int. Cl.: F03D 11/00

(54) **ARRETIERUNGSVORRICHTUNG FÜR EINEN ROTOR VON WINDENERGIEANLAGEN**
LOCKING DEVICE FOR A ROTOR OF A WIND TURBINE
DISPOSITIF DE BLOCAGE POUR UN ROTOR D'ÉOLIENNE

(30) Priorität: 23.12.2008 DE 102008063043
(43) Veröffentlichungstag der Anmeldung: 28.09.2011
(73) Patentinhaber: aerodyn Engineering GmbH, 24768 Rendsburg (DE)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2009/001662
(87) Internationale Veröffentlichungsnummer: WO 2010/072190

(56) Entgegenhaltungen:
- EP-A1- 1 925 820
- EP-A1- 2 148 090
- WO-A2-2010/063291
- DE-A1- 10 351 524
- DE-A1-102004 013 624
- DE-A1-102004 017 323
- DE-A1-102004 028 746
- KR-B1- 100 821 704

## Beschreibung

Die Erfindung betrifft eine Windenergieanlage mit einem Turm, einer auf dem Turm angeordneten Gondel und einem mit der Gondel verbundenen, eine Rotorwelle, eine Rotornabe und wenigstens ein an der Rotornabe befestigtes Rotorblatt aufweisenden Rotor, wobei die Windenergieanlage eine einen in eine Arretierbolzenaufnahme einfahrbaren Arretierbolzen aufweisende Arretiervorrichtung zur formschlüssigen Arretierung des Rotors aufweist.

Die formschlüssige Arretierung des Rotors einer Windenergieanlage ist immer dann notwendig, wenn sichergestellt sein muss, dass die Drehung des Rotors ausgeschlossen ist, beispielsweise bei der Reparatur und Wartung von Windenergieanlagen oder beim Verbringen des Rotors in eine Parkstellung bei Extremwetterbedingungen.

Ein Verfahren zum Arretieren des Rotors ist aus der DE 10 2004 013 624 A1 bekannt. Hierfür ist eine konzentrisch an der Rotorachse befestigte von mindestens einer Ausnehmung durchsetzte Scheibe vorgesehen, in die ein sich parallel zur Rotorachse erstreckender Arretierungsbolzen, der sich an der Rahmenkonstruktion der Windenergieanlage abstützt, bevorzugt hydraulisch eingefahren werden kann und den Rotor arretiert.

EP 1 925 820 A1 beschreibt eine Arretierungsvorrichtung mit einem an einer Bremse angeordneten Arretierungsbolzen, welcher in ein Soch in einer Bremsscheibe eingreift.

Nachteil dieses Verfahrens und des damit verbundenen konstruktiven Aufbaus ist jedoch, dass diese Ausführung dem Trend zu kompakteren und leichteren Anlagen entgegensteht. Insbesondere bei Windenergieanlagen ohne Gondelverkleidung sind die an der Gondel angeordneten oftmals hydraulisch verfahrbaren Arretierungsbolzen den Wettereinwirkungen direkt ausgesetzt, wodurch eine hohe Anfälligkeit dieses Sicherungssystems aufgrund des Eindringens von Feuchtigkeit und Aerosolen gegeben ist.

Eine Aufnahme der Arretierbolzenmechanik bzw. -hydraulik in das Gehäuse der verkleidungslosen Gondel ist nicht geboten, weil die Gefahr besteht, dass Feuchtigkeit und Aerosole auch in die Komponenten der Gondel eindringen und Schädigungen der Gondel hervorrufen.

Ein weiterer Nachteil ist, dass die Befestigung der Arretierbolzenmechanik an der Gondel sehr aufwändig ist, da in dem Anschlussbereich von Arretierbolzen und Gondel große Kräfte auftreten können, die sehr aufwändig in das Gehäuse und die Tragstruktur eingeleitet werden müssen. Zusätzlich muss auch eine große mit mehreren Löchern versehene Scheibe zwischen Rotorwelle und Nabe eingebracht werden, die als sehr sperriges Bauteil die Montage einer Windenergieanlage erschwert.

Aufgabe der Erfindung ist es daher, eine Arretiervorrichtung für eine Windenergieanlage zu schaffen, die auch bei Windenergieanlagen ohne Gondelverkleidung weitestgehend vor direkten Wettereinwirkungen geschützt ist.

Die Aufgabe wird erfindungsgemäß durch die Windenergieanlage mit den Merkmalen von Anspruch 1 gelöst. Die Unteransprüche geben vorteilhafte Ausgestaltungen der Erfindung wieder.

Die Erfindung wird anhand eines in den beigefügten Zeichnungen dargestellten, besonders bevorzugten Ausführungsbeispiels näher erläutert. Es zeigen:
- Fig. 1: eine perspektivische Ansicht einer erfindungsgemäß ausgebildeten Windenergieanlage;
- Fig. 2: eine perspektivische Ansicht der Nabe der in Fig. 1 dargestellten Windenergieanlage;
- Fig. 3: eine geschnittene Ansicht der Nabe mit der Arretiervorrichtung in einer ersten Stellung, in der der Rotor der Windenergieanlage frei drehbar ist; und
- Fig. 4: eine geschnittene Ansicht der Nabe mit der Arretiervorrichtung in einer zweiten, den Rotor der Windenergieanlage arretierenden Stellung.

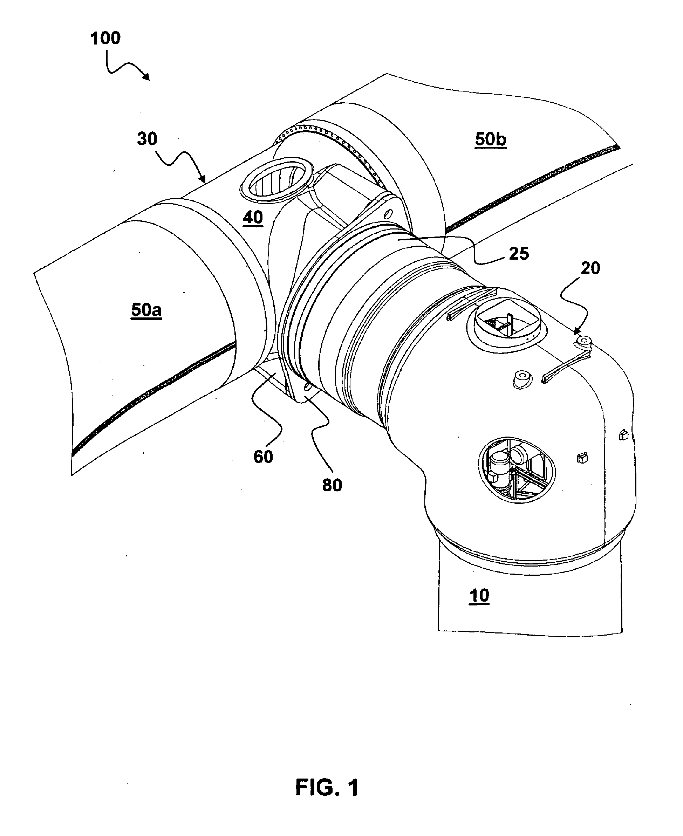

Fig. 1 zeigt eine perspektivische Ansicht einer erfindungsgemäß ausgebildeten Windenergieanlage, die im gezeigten Beispiel mit einem Zweiblattrotor ausgestattet ist. Die Windenergieanlage 100 weist einen Turm 10, eine auf dem Turm 10 angeordnete, einen Maschinenträger, ein Rotorwellenlager und einen Generator aufweisende Gondel 20, und einen eine Rotorwelle, eine Rotornabe 40 und zwei an der Rotornabe 40 befestigtes Rotorblätter 50a, 50b aufweisenden Rotor 30 auf.

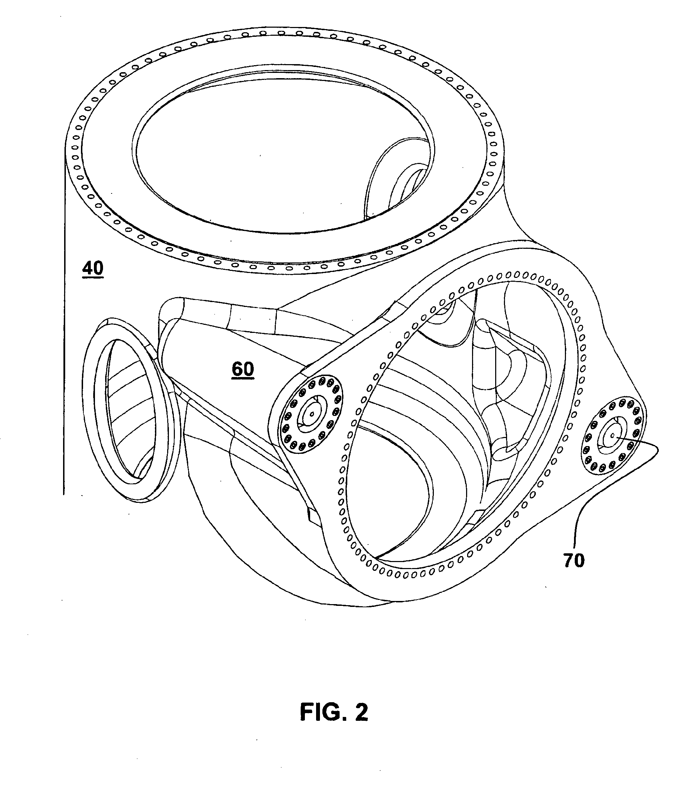

Wie aus den Fig. 2, 3 und 4 ersichtlich ist erfindungsgemäß vorgesehen, dass wenigstens ein, bevorzugt zwei Arretierbolzen 70 an der Nabe 40 des Rotors 30 und die Arretierbolzenaufnahme 90 an der Gondel 20 vorgesehen sind. Hierdurch ist der Arretierbolzen 70 weitestgehend von der Nabe 40 vor Wettereinflüssen geschützt. Gleichermaßen wird die Arretierbolzenaufnahme 90 - wie dargestellt - bevorzugt als ein Loch im scheibenförmigen Element 80 oder (alternativ) als blind endende Ausnehmung in der Gehäusewand der Gondel 20 ausgebildet, sodass in jedem Fall keine in das Innere der Gondel 20 führende Öffnung vorgesehen sein muss.

Unter Gondel 20 wird hier die dem Turm 10 der Windenergieanlage 100 aufgesetzte im Wesentlichen aus Rotorlager, gegebenenfalls Getriebe und Generator bestehende Einheit bezeichnet, wobei die Arretieraufnahmen 90 im dem der Nabe 40 benachbarten Abschnitt der Gondel 20 vorgesehen sind. Dieser Abschnitt kann das Gehäuse, beispielsweise das Lagergehäuse des Rotorwellenlagers 25, oder eine besondere an der Gondel 20 befestigte Struktur 80 sein.

Im gezeigten Ausführungsbeispiel ist die Arretierbolzenaufnahme 90 tatsächlich in einem an der Gondel 20 befestigten scheibenförmigen Element 80 eingerichtet, dass bevorzugt als Bestandteil des Rotorlagergehäuses 25 ausgebildet ist.

Bevorzugt sind die Arretierbolzen 70 hydraulisch betrieben, wobei in der Nabe 40 ohnehin regelmäßig hydraulische Stellvorrichtungen zum Verstellen der Rotorblätter 50a, 50b vorgesehen sind, sodass die vorhandenen hydraulischen Systeme für das Verfahren des Hydraulikbolzens 70 in die Arretierbolzenaufnahme 90 und aus dieser wieder heraus gegebenenfalls mit verwendet werden können.

Um die Arretierung des Rotors 30 vornehmen zu können, ist es notwendig, dass die Achse des Arretierbolzens 70 und die Achse der Arretierbolzenaufnahme 90 unter Berücksichtigung von Toleranzen annähernd fluchtend ausgerichtet sind. Hierfür ist eine Steuerung vorgesehen, die ein Anfahren dieser Position, beispielsweise durch geregeltes Abbremsen des Rotors 30 durch eine Scheibenbremse in die Arretierstellung, ermöglicht.

Aus Sicherheitsgründen ist hierbei zusätzlich eine Prüfvorrichtung vorzusehen, die einen Soll-Ist-Vergleich zwischen der von der Steuerung angefahrenen Position und der tatsächlichen Position von Arretierbolzen 70 und Arretierbolzenaufnahme 90 überprüft. Um Schädigungen der Anlage durch Ausfahren des Arretierbolzens 70 in einer Rotorposition, in der die Achse des Arretierbolzens 70 und die Achse der Arretierbolzenaufnahme 90 unter Berücksichtigung von Toleranzen nicht übereinstimmt, vorzubeugen, wird der Arretierbolzen 70 nur dann ausgefahren, wenn die geprüfte Position tatsächlich der Position entspricht, in der der Arretierbolzen 70 in die Arretierbolzenaufnahme 90 sicher eingefahren werden kann.

Weiterhin kann mehr als eine Arretieraufnahme 90 vorgesehen sein, die an der Gondel 20 bzw. dem Gehäuse der Gondel 20 angeordnet ist. Die Arretierbolzenaufnahmen 90 befinden sich auf dem bei Drehung des Rotors 30 vom Arretierbolzen 70 beschriebenen Kreis und können als blind endende Ausnehmungen des Gehäuses der Gondel 20 oder als zusätzliche an der Gondel 20 befestigte bevorzugt ringförmige Strukturelemente 80 ausgebildet sein, wobei auch andere geometrische Formen der Aufnahmen denkbar sind. Beispielsweise können die Arretierbolzenaufnahmen 90 als blind endende Ausnehmungen in dem der Nabe 40 benachbarten ersten Abschnitt der Gondel 20, also dem Lagergehäuse des Rotorwellenlagers 25, angeordnet sein.

Schließlich können auch mehr als ein Arretierbolzen 70 und eine Arretierbolzenaufnahmc 90, nämlich wenigstens zwei Arretierbolzen 70 und zwei Arretierbolzenaufnahmen 90 vorgesehen sein.

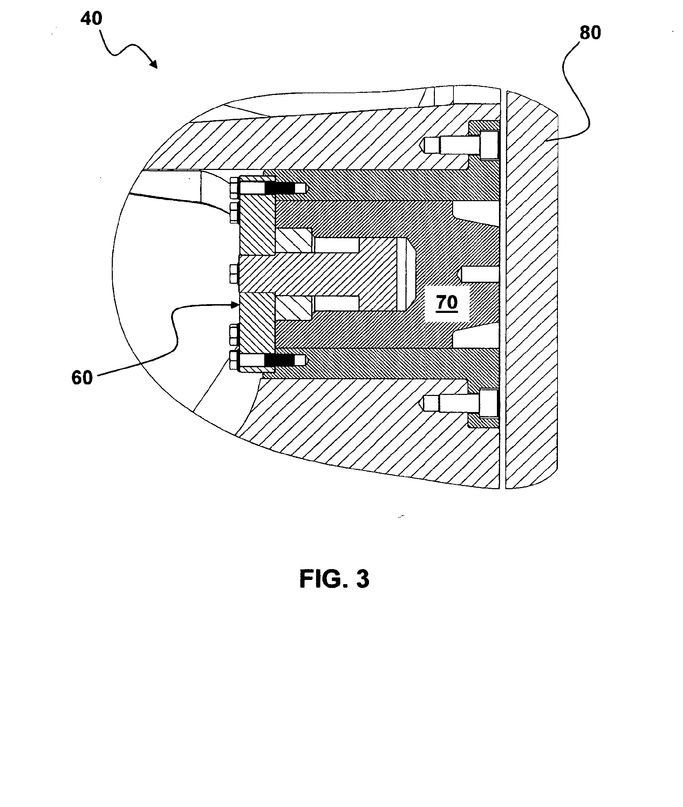

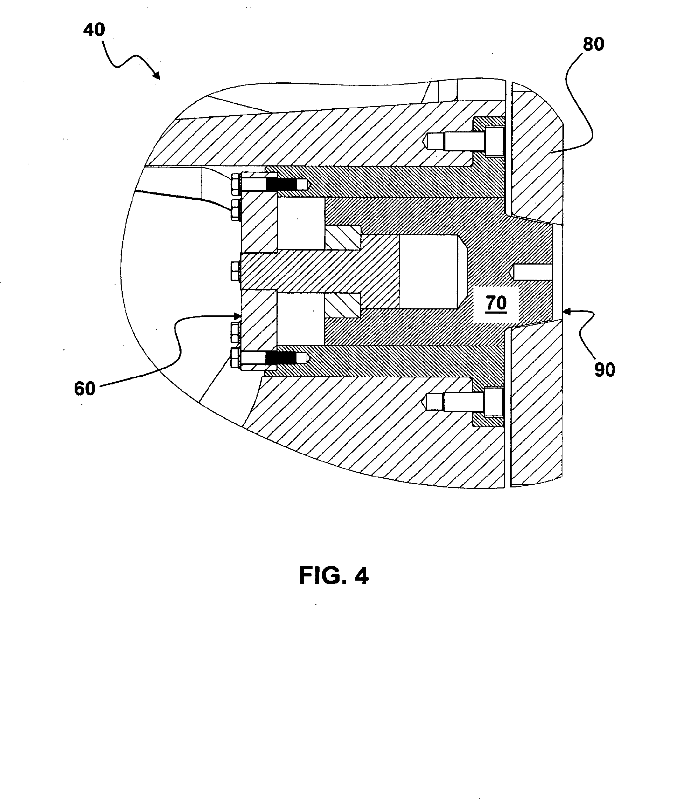

Fig. 3 und Fig. 4 zeigen abschließend die geometrischen Verhältnisse in unterschiedlichen Rotorstellungen in jeweils einer Schnittansicht durch die Nabe 40. In Fig. 3 ist der Hydraulikbolzen 70 eingefahren, sodass der Rotor 30 der Windenergieanlage 100 frei drehen kann. In Fig. 4 befindet sich der Rotor 30 in der Arretierstellung, wobei der Hydraulikbolzen 70 aus der Nabe 40 in die Arretierbolzenaufnahme 90 ausgefahren ist, sodass der Rotor 30 arretiert ist und nicht frei drehen kann. Um eine effektive formschlüssige Arretierung zu erreichen, ist der Arretierbolzen 70 bevorzugt als Außenkonus und die Arretieraufnahme 90 als Gegenstück mit einem Innenkonus ausgebildet.

## Patentansprüche

1. Windenergieanlage (100) mit einem Turm (10), einer auf dem Turm (10) angeordneten, einen Maschinenträger, ein Rotorwellenlager und einen Generator aufweisende Gondel (20), und mit einem eine Rotorwelle, eine Rotornabe (40) und wenigstens ein an der Rotornabe (40) befestigtes Rotorblatt (50a, 50b) aufweisenden Rotor (30),
wobei die Windenergieanlage (100) eine aus einem in eine Arretierbolzenaufnahme (90) einfahrbaren Arretierbolzen (70) bestehende Arretiervorrichtung (60,70, 80, 90) zur formschlüssigen Arretierung des Rotors (30) aufweist,
der Arretierbolzen (70) an der Rotornabe (40) und die Arretierbolzenaufnahme (90) an der Gondel (20) angeordnet sind
**dadurch gekennzeichnet, dass**
die Arretierbolzenaufnahme (90) als Loch in einem an der Gondel befestigten scheibenförmigen Element (80) oder als blind endende Ausnehmung in der Gehäusewand der Gondel (20), jeweils ohne in das Innere der Gondel (20) führende Öffnung, ausgebildet ist.

2. Windenergieanlage (100) nach Anspruch 1, **dadurch gekennzeichnet, dass** die Arretierbolzenaufnahme (90) am Rotorwellenlagergehäuse (25) angeordnet ist.

3. Windenergieanlage (100) nach einem der vorhergehenden Ansprüche, **dadurch gekennzeichnet, dass** der Arretierbolzen (70) hydraulisch betrieben ist.

4. Windenergieanlage (100) nach einem der vorhergehenden Ansprüche, **gekennzeichnet durch** eine Steuerung zum Anfahren einer Rotorposition, in der die Achse des Arretierbolzens (70) und die Achse der Arretierbolzenaufnahme (90) annähernd fluchtend ausgerichtet sind.

5. Windenergieanlage (100) nach einem der vorhergehenden Ansprüche, **gekennzeichnet durch** eine Prüfvorrichtung zum Überprüfen der Position von Arretierbolzen (70) und Arretierbolzenaufnahme (90).

6. Windenergieanlage (100) nach einem der vorhergehenden Ansprüche, **dadurch gekennzeichnet, dass** der Arretierbolzen (70) als Außenkonus ausgebildet und die Arretierbolzenaufnahme (90) einen als Innenkonus ausgebildeten Abschnitt aufweist.

7. Windenergieanlage (100) nach einem der vorhergehenden Ansprüche, **gekennzeichnet durch** wenigstens eine weitere Arretierbolzenaufnahme (90).

8. Windenergieanlage (100) nach einem der vorhergehenden Ansprüche, **dadurch gekennzeichnet, dass** wenigstens zwei Arretierbolzen (70) und zwei Arretierbolzenaufnahmen (90) vorgesehen sind.

## Claims

1. A wind turbine (100) comprising a tower (10), a nacelle (20) that is located on the tower (10) and is provided with a machine support, a rotor shaft bearing and a generator, and comprising a rotor (30) with a rotor shaft, a rotor hub (40) and at least one rotor (30) with at least one rotor blade (50a, 50b) that is fixed to the rotor hub (40),
the wind turbine (100) having a locking device (60, 70, 80, 90) consisting of a locking bolt (70) that can be driven into a locking bolt recess (90) in order to positively lock the rotor (30),
the locking bolt (70) being located on the rotor hub (40) and the locking bolt recess (90) being located on the nacelle (20),
**characterized in that**
the locking bolt recess (90) is formed as a hole in a disc-shaped element (80) fastened to the nacelle or as a blind recess in the housing wall of the nacelle (20), in each case without an opening that leads into the interior of the nacelle (20).

2. The wind turbine (100) according to Claim 1, **characterized in that** the locking bolt recess (90) is arranged on the rotor shaft bearing housing (25).

3. The wind turbine (100) according to one of the preceding claims, **characterized in that** the locking bolt (70) is operated hydraulically.

4. The wind turbine (100) according to one of the preceding claims, **characterized by** a control system for approaching a rotor position in which the axis of the locking bolt (70) and the axis of the locking bolt recess (90) are oriented approximately flush.

5. The wind turbine (100) according to one of the preceding claims, **characterized by** a checking device for checking the position of the locking bolt (70) and the locking bolt recess (90).

6. The wind turbine (100) according to one of the preceding claims, **characterized in that** the locking bolt (70) is designed as an outside cone and the locking bolt recess (90) has a section designed as an inside cone.

7. The wind turbine (100) according to one of the preceding claims, **characterized by** at least one further locking bolt recess (90).

8. The wind turbine (100) according to one of the preceding claims, **characterized in that** at least two locking bolts (70) and two locking bolt recesses (90) are provided.

## Revendications

1. Éolienne (100) dotée d'une tour (10), d'un support pour machines situé sur la tour (10), d'un palier d'arbre de rotor et d'une gondole (20) équipée d'un générateur et un palier de rotor, un moyeu de rotor (40), un rotor (30) équipé au moins d'une pale de rotor (50a, 50b) sur le moyeu du rotor,
à savoir que l'éolienne (100) est dotée d'un dispositif d'arrêt (60,70, 80, 90) composée d'un boulon d'arrêt rétractable (70) dans un logement (90) et permettant un blocage du rotor (30),
le boulon d'arrêt (70) sur le moyeu du rotor (40) et le logement du boulon d'arret (90) sur la gondole (20)
**caractérisée en ce que**
le logement du boulon de blocage (90) a la forme d'une forure dans un élément (80) ayant la forme d'un disque et fixé sur la gondole, ou une exclusion à extrémité aveugle dans la paroi du carter de la gondole (20), chacun sans l'ouverture menant à l'intérieur de la gondole (20).

2. Éolienne (100) d'après la revendication 1, **caractérisée en ce que** le logement du boulon d'arrêt (90) se trouve sur le boîtier de l'arbre du rotor (25).

3. Éolienne (100) d'après une des revendications ci-dessus, **caractérisée en ce que** le boulon d'arrêt (70) soit équipé d'un entraînement hydraulique.

4. Éolienne (100) d'après une des revendications ci-dessus, **caractérisée en ce que** son système de commande de la position du rotor pour l'axe du boulon d'arrêt (70) et l'axe du logement pour le boulon d'arrêt (90) soit orienté de manière fuyante.

5. Éolienne (100) d'après une des revendications ci-dessus, **caractérisée par** un dispositif de contrôle de la position du boulon d'arrêt (70) et du logement du boulon d'arrêt (90).

6. Éolienne (100) d'après une des revendications ci-dessus, **caractérisée en ce que** le boulon d'arrêt (70) ait la forme d'un cône extérieur et que le logement pour le boulon d'arrêt (90) ait la forme d'un cône intérieur.

7. Éolienne (100) d'après une des revendications ci-dessus, **caractérisée en ce qu'**il soit prévu au moins un logement supplémentaire pour boulon d'arrêt (90).

8. Éolienne (100) d'après une des revendications ci-dessus, **caractérisée en ce que** au moins deux boulons d'arrêt (70) et deux logements de boulons d'arrêt (90) soient prévus.
